(19) Europäisches Patentamt / European Patent Office / Office européen des brevets

(11) **EP 4 139 707 B1**

(12) **FASCICULE DE BREVET EUROPEEN**

(45) Date de publication et mention
de la délivrance du brevet:
**26.11.2025 Bulletin 2025/48**

(21) Numéro de dépôt: **21720248.0**

(22) Date de dépôt: **20.04.2021**

(51) Classification Internationale des Brevets (IPC):
**G01S 13/90** (2006.01)     **G01C 11/06** (2006.01)
**G01C 11/08** (2006.01)

(52) Classification Coopérative des Brevets (CPC):
**G01C 11/06; G01C 11/08; G01S 13/9021**

(86) Numéro de dépôt international:
**PCT/EP2021/060164**

(87) Numéro de publication internationale:
**WO 2021/214016 (28.10.2021 Gazette 2021/43)**

(54) **PROCÉDÉ DE CALAGE GÉOMÉTRIQUE DE MODÈLE NUMÉRIQUE D'ÉLÉVATION**

VERFAHREN ZUR GEOREFERENZIERUNG EINES DIGITALEN HÖHENMODELLS

METHOD FOR GEOREFERENCING OF A DIGITAL ELEVATION MODEL

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: **23.04.2020 FR 2004044**

(43) Date de publication de la demande:
**01.03.2023 Bulletin 2023/09**

(73) Titulaire: **Airbus Defence and Space SAS**
**31402 Toulouse Cedex 4 (FR)**

(72) Inventeur: **NONIN, Philippe**
**31400 TOULOUSE (FR)**

(74) Mandataire: **Santarelli**
**Tour Trinity**
**1 bis Place de la Défense**
**92400 Courbevoie (FR)**

(56) Documents cités:
CN-B- 106 646 468

- **HONGXING LIU ET AL: "Correction of positional errors and geometric distortions in topographic maps and DEMs using a rigorous SAR simulation technique", PHOTOGRAMMETRIC ENGINEERING & REMOTE SENSING [H.W. WILSON - AST], 1 September 2004 (2004-09-01), pages 1031 - 1042, XP055231053, Retrieved from the Internet <URL:http://www.asprs.org/a/publications/pers/2004journal/september/2004_sep_1031-1042.pdf> [retrieved on 20151125], DOI: 10.14358/PERS.70.9.1031**
- **SEFERCIK UMUT GUNES ET AL: "Terrain estimation performance of advanced SAR satellites: Cosmo-SkyMed and TerraSAR-X", 2017 8TH INTERNATIONAL CONFERENCE ON RECENT ADVANCES IN SPACE TECHNOLOGIES (RAST), IEEE, 19 June 2017 (2017-06-19), pages 149 - 154, XP033137933, DOI: 10.1109/RAST.2017.8003006**
- **WANG YANPING ET AL: "Ground-Based Differential Interferometry SAR: A Review", IEEE GEOSCIENCE AND REMOTE SENSING MAGAZINE, IEEE, USA, vol. 8, no. 1, 30 January 2020 (2020-01-30), pages 43 - 70, XP011776658, ISSN: 2473-2397, [retrieved on 20200306], DOI: 10.1109/MGRS.2019.2963169**

**Description**

**Domaine technique de l'invention**

La présente invention concerne un procédé avancé de calage géométrique de modèles numériques d'élévation. Plus particulièrement, l'invention concerne un procédé permettant de caler des modèles numériques représentant la surface du globe terrestre provenant d'images capturées depuis des d'engins d'observation de la surface de la Terre.

**Technique antérieure**

Les modèles numériques de terrain sont des représentations en trois dimensions de la surface de la terre. On distingue en général les modèles numériques de terrain (MNT) ou DTM pour Digital Terrain Model en anglais qui représentent la surface d'un terrain créée à partir des données d'altitude de ce terrain mais sans les éléments du sursol qui le composent (végétation, infrastructure, etc···), et des modèles numériques d'élévation (MNE) ou DEM pour Digital Elevation Model en anglais ou de surface (MNS) ou DSM pour Digital Surface Model en anglais, qui représentent la surface de ce même terrain mais en y intégrant les éléments de sursol.

Les modèles numériques d'élévation peuvent être générés à partir de différentes techniques telles que : la photogrammétrie qui utilise des techniques de stéréo restitution à partir d'un couple stéréoscopique composé de deux images optiques de la surface de la terre acquises par des capteurs d'images optiques embarqué à bord d'un satellite, à bord d'un avion ou de tout aéronef ; l'interférométrie radar qui utilise des images radar de type SAR, c'est-à-dire d'images radars acquises par des capteurs radar à synthèse d'ouverture, et en particulier un couple interférométrique d'image SAR acquis par des capteurs radar à synthèse d'ouverture embarqués à bord d'un satellite ou d'un avion.

La précision des modèles numériques d'élévation obtenus par ces différentes techniques et les incertitudes sur les mesures dépendent fortement de la précision des moyens d'acquisition et des données utilisées en entrée de ces techniques.

L'utilisation de capteurs optiques très haute résolution de dernières générations dans un procédé de stéréo restitution permettent de produire des modèles numériques dont la précision relative est de l'ordre du mètre. Toutefois, la précision absolue est limitée par l'incertitude des conditions de prises de vue de ces images optiques. En effet, il est très difficile de déterminer avec une précision suffisante l'orientation d'un capteur optique embarqué à bord d'un satellite. L'estimation précise de cette orientation au moment de la prise de vue s'effectue donc à postériori mais cela suppose la connaissance de points de repère, appelés points d'appui ou encore « ground control points » en anglais (GCP), dont la position sur le terrain est connue.

La précision relative des modèles numériques de d'élévation obtenus par interférométrie radar est elle aussi élevée dans le cas d'acquisitions hautes résolutions. L'interférométrie radar consiste à exploiter un couple d'image radar de type SAR acquis simultanément par deux antennes proches l'une de l'autre (quelques dizaines à quelques centaines de mètres). On distingue le cas mono statique, où les deux antennes émettent et reçoivent indépendamment leur propre écho, et le cas bi-statique, où une seule antenne émet un signal dont l'écho est ensuite reçu par les deux. La différence observée entre la phase des deux échos reçus indique la différence (modulo la longueur d'onde) des distances entre les antennes et le point visé, ce qui, compte tenu de la position des antennes et de la distance mesurée par chacune d'elles, permet de localiser le point en 3D. Toutefois, la précision absolue de la mesure dépend de l'orientation de la base interférométrique, c'est-à-dire de la droite reliant les 2 antennes. Si la position relative des antennes est connue avec une faible incertitude, par exemple de quelques millimètres, celle-ci n'est pas suffisante pour connaitre l'orientation de la base interférométrique avec la précision requise. Par exemple, trois millimètres sur une base de 300m induit 10 microradians d'incertitude, c'est-à-dire 7 mètres sur le terrain à 700km. L'article de Hongxing et al. « Correction of positional errors and geometric distortions in topographie maps and DEMs using a rigorous SAR simulation technique », Photogrammetric Engineering & Remote Sensing, sept. 2004, décrit un procédé de correction d'un modèle numérique d'élévation d'une zone donnée basé sur la comparaison entre une image radar SAR simulée de la zone donnée et une image radar SAR de référence.

Il est donc nécessaire de trouver un procédé permettant d'améliorer la précision géométrique des modèles numériques d'élévation obtenus par interférométrie radar ou par photogrammétrie sur base d'images optiques très hautes résolutions. Il est également nécessaire de trouver un procédé le plus automatisé possible et qui n'exige pas l'utilisation d'une base de données de points de calage spécifiques.

**Présentation de l'invention**

La présente invention vise à remédier aux inconvénients des procédés connus de calage géométrique de modèles numériques d'élévation avec une approche totalement novatrice.

A cet effet, selon un premier aspect, la présente invention se rapporte à un procédé de calage géométrique d'un modèle numérique d'élévation de la surface de la Terre comprenant une première étape d'obtention d'au moins deux images radar à synthèse d'ouverture dites images radar de référence, l'emprise au sol de chaque image radar de référence comportant une zone commune à la zone de chevauchement avec l'emprise au sol d'au moins une autre des au moins deux images radar de référence et avec le modèle numérique d'élévation.

Le procédé comporte de plus, pour chaque image radar de référence, des étapes de : sélection d'au moins une aire d'intérêt sur la zone commune ; calcul d'une image radar simulée sur l'au moins une aire d'intérêt sélectionnée à partir des paramètres d'acquisition de l'image radar de référence ; estimation d'un décalage géométrique entre l'images radar simulée et l'image radar de référence.

Le procédé comprend ensuite des étapes de sélection d'au moins un point de calage sur l'au moins une aire d'intérêt sélectionnée à partir du modèle numérique d'élévation, l'au moins un point de calage comportant des coordonnées dans le référentiel du modèle numérique d'élévation; projection dudit au moins un point de calage dans chacune des au moins deux images radar de référence par une fonction de projection radar relative à chaque image de sorte à obtenir au moins un point de liaison radar relatif à chacune des au moins deux images radar de référence; correction du au moins un point de liaison radar de chacune des au moins deux images radar de référence par application dudit décalage géométrique estimé pour chacune des images radar de référence de sorte à obtenir au moins un point de liaison radar corrigé relatif à chaque image radar de référence ; calcul des coordonnées terrain recalées du au moins un point de calage par application d'un processus de triangulation par stéréoscopie appliqué auxdites au moins deux images radar de référence à partir du au moins un point de liaison corrigé relatif à chaque image radar de référence ; et calage géométrique du modèle numérique d'élévation par transformation en fonction des écarts constatés entre les coordonnées terrain recalées et les coordonnées terrain dans le référentiel du modèle numérique d'élévation.

L'invention est mise en œuvre selon les modes de réalisation et les variantes exposées ci-après, lesquelles sont à considérer individuellement ou selon toute combinaison techniquement opérante.

Avantageusement, l'étape d'estimation du décalage géométrique entre l'image radar simulée et l'image radar de référence peut comprendre la maximisation de la probabilité conditionnelle du décalage connaissant l'image radar de référence considérée.

Avantageusement, l'étape de calcul de l'image radar simulée peut comprendre la détermination d'un facteur de réflectance moyen de l'image SAR de référence calculé sur l'aire d'intérêt considérée pour le calcul de ladite image SAR simulée.

Avantageusement, chaque aire d'intérêt sélectionnée peut représenter une zone restreinte de la zone de commune.

Avantageusement, l'étape de sélection d'au moins une aire d'intérêt peut être une sélection d'au moins une zone d'intérêt par intervalle de cinquante kilomètres, selon un axe Nord -Sud.

Avantageusement, lors de l'étape d'obtention d'au moins deux images radar de référence, peuvent-être sélectionnées des images radar acquises par tout satellite radar à synthèse d'ouverture dans des directions de visée opposées.

Avantageusement, le modèle numérique d'élévation peut être issu d'un couple interférométrique d'images radar à synthèse d'ouverture et en ce que l'une des images de ce couple interférométrique est retenue lors de l'étape d'obtention d'au moins deux images radar de référence. Selon cette hypothèse l'étape de calcul d'une image radar simulée et l'étape d'estimation d'un décalage géométrique peuvent rapporter uniquement aux autres images radar de référence des au moins deux images radar de référence obtenues, l'étape de correction du au moins un point de liaison radar de l'images radar de référence correspondant à une des images du couple interférométrique comporte un décalage géométrique nul.

Selon un second aspect, la présente invention se rapporte à un système de calage géométrique du modèle numérique d'élévation pour la mise en œuvre du procédé décrit ci-dessus comportant une unité de traitement d'informations et une mémoire vive associée à l'unité de traitement d'informations, ladite mémoire vive comprenant des instructions de mise en œuvre du procédé, ladite unité de traitement d'informations étant configurée pour exécuter les instructions mettant en œuvre le procédé.

Selon un troisième aspect, la présente invention se rapporte à un produit programme d'ordinateur comprenant des instructions qui, lorsque le programme est exécuté par un ordinateur, conduisent celui-ci à mettre en œuvre les étapes du procédé de calage géométrique d'un modèle numérique d'élévation décrit ci-dessus.

Selon un quatrième aspect, la présente invention se rapporte à un support de stockage d'informations stockant un programme d'ordinateur comprenant des instructions pour implémenter, par un processeur, le procédé décrit ci-dessus, lorsque ledit programme est lu et exécuté par ledit processeur.

**Brève description des figures**

D'autres avantages, buts et caractéristiques de la présente invention ressortent de la description qui suit faite, dans un but explicatif et nullement limitatif, en regard des dessins annexés, dans lesquels :

[Fig. 1] la figure 1 est une représentation schématique d'une zone commune de chevauchement entre un modèle numérique d'élévation et deux images SAR de référence selon un premier mode de réalisation de l'invention.

[Fig. 2] la figure 2 est une représentation schématique d'une sélection de deux aires d'intérêt sur la zone commune de la figue 1.

[Fig. 3] la figure 3 est une représentation schématique d'obtention d'images radar simulées à partir de l'aire d'intérêt sélectionné à la figure 2 et des deux images SAR de référence de la figure 1.

[Fig. 4] la figure 4 est une représentation schématique d'une sélection d'un point de calage sur l'aire d'intérêt sélectionnée à la figure 2.

[Fig. 5] la figure 5 est une représentation schématique de la détermination d'un couple de points de liaison dans les deux images radar de référence par projection du point de calage de la figure 4.

[Fig. 6] la figure 6 est une représentation schématique d'obtention du modèle numérique d'élévation recalé géométriquement à partir de deux images SAR de référence.

[Fig. 7] la figure 7 est une représentation schématique de deux zones communes de chevauchement entre un modèle numérique d'élévation et trois images SAR de référence selon un second mode de réalisation de l'invention.

[Fig. 8] la figure 8 est une représentation schématique d'une sélection de deux aires d'intérêt respectivement sur les deux zones communes de la figue 7.

[Fig. 9] la figure 9 est une représentation schématique d'obtention d'images radar simulées à partir des deux aires d'intérêt sélectionnées à la figure 8 et des trois images SAR de référence de la figure 7.

[Fig. 10] la figure 10 est une représentation schématique d'une sélection de deux points de calage respectivement sur les deux aires d'intérêt sélectionnées à la figure 8.

[Fig. 11] la figure 11 est une représentation schématique de la détermination de deux couples de points de liaison réparti dans les trois images radar de référence par projection des deux points de calage de la figure 10.

[Fig. 12] la figure 12 est une représentation schématique d'obtention du modèle numérique d'élévation recalé géométriquement à partir de trois images radar de référence.

[Fig. 13] la figure 13 est un exemple d'un organigramme du procédé de calage géométrique d'un modèle numérique d'élévation selon l'invention.

[Fig. 14] la figure 14 est une représentation schématique d'un exemple de système de mise en œuvre du procédé de calage géométrique d'un modèle numérique d'élévation selon la figure 13.

## Description des modes de réalisation

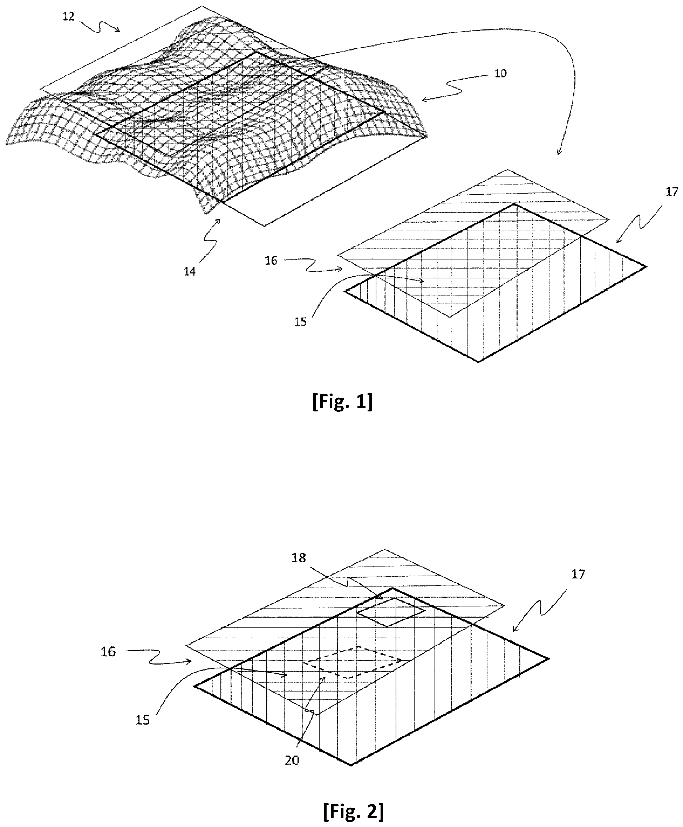

Selon la figure 1, un procédé de calage géométrique d'un modèle numérique d'élévation (MNE) 10 comprend un modèle numérique d'élévation 10 représentant la surface d'un terrain et les éléments de sursol du terrain. Le modèle numérique d'élévation 10 peut avoir été obtenu, par exemple et de manière non limitative, par un procédé d'interférométrie radar ou encore par un procédé de photogrammétrie utilisant des techniques de stéréo restitution à partir d'un couple stéréoscopique composé de deux images optiques de la surface de la terre, ou encore par tout autre procédé de génération de modèle numérique d'élévation 10 représentatif de la surface du globe terrestre. On entend par modèle numérique d'élévation 10 ou de surface, tout modèle tridimensionnel représentant une portion de la surface du globe terrestre. Le format du modèle numérique d'élévation 10 selon l'invention importe peu. Tout format est applicable, tel que par exemple et de manière non limitative, une grille d'altitude, un nuage de points tridimensionnels, un réseau de triangles irréguliers, dénommé selon la terminologie anglo-saxonne 'triangulated irregular network' selon l'acronyme 'TIN', ou encore tout maillage de surface quelconque.

Selon la figure 1, le procédé de calage géométrique d'un modèle numérique d'élévation 10 comprend l'obtention d'au moins deux images radar dont l'acquisition s'est faite par un ou deux capteurs radars à synthèse d'ouverture. Bien que la figure 1 est représentée avec deux images radar 12, 14, il conviendra selon l'invention, que le procédé de calage peut être exécuté avec une pluralité d'images SAR de référence. On parlera dans la suite de la description, d'une image SAR de référence pour désigner une image radar de référence acquise par un capteur radar à synthèse d'ouverture. A titre d'exemple non limitatif, les au moins deux images SAR de référence 12, 14 peuvent provenir d'une base de données d'images SAR.

Selon l'invention, l'emprise au sol de chacune des au moins deux images SAR de référence 12, 14 recouvre en totalité ou en partie, la surface du terrain couverte par le modèle numérique d'élévation 10. Pour la suite de l'exposé, on nommera zone de chevauchement 16, 17 la zone correspondant à l'intersection entre l'emprise au sol d'une image SAR de référence 12, 14 et la zone géographique couverte par le modèle numérique d'élévation 10. Plus particulièrement, l'emprise au sol des au moins deux images radar de référence 12, 14 comporte une zone commune 15 à la zone de chevauchement 16, 17 avec l'emprise au sol d'au moins une autre des au moins deux images radar de référence 12, 14 et avec le modèle numérique d'élévation 10.

De préférence, il conviendra d'apporter une attention particulière au rapport stéréoscopique, c'est-à-dire par le rapport base/hauteur (B/H) du triangle formé par les 2 capteurs et la scène observée. A cet effet, ces deux images SAR de référence 12, 14 doivent avoir été acquises à partir de positions suffisamment éloignées de façon à bénéficier d'un angle stéréoscopique B/H favorable à la triangulation de points extraits et recalés par le présent procédé. L'utilisation d'images SAR acquises par tout satellite radar à synthèse d'ouverture sur la zone considérée selon des directions de visée opposées constitue une configuration géométrique suffisante pour obtenir un angle stéréoscopique B/H adapté au présent procédé. Ainsi, on peut citer, selon un premier exemple, l'utilisation d'au moins une image SAR acquise par un satellite radar à synthèse d'ouverture sur la zone considérée selon une direction de visée orientée vers l'Est et d'au moins une image SAR acquise par un satellite radar à synthèse d'ouverture sur la zone considérée selon une direction de visée orientée vers l'Ouest, comme une configuration géométrique suffisante pour obtenir un angle stéréoscopique (B/H) adapté au présent procédé. Selon un autre exemple relatif au satellite radar à synthèse d'ouverture TerraSAR-X, l'utilisation comme images SAR de référence d'une image SAR acquise par le satellite en mode ascendant sur la zone considérée et d'une autre image SAR acquise par le satellite en mode descendant sur la zone considérée, selon le sens de passage du satellite, est également une configuration géométrique suffisante pour obtenir un angle stéréoscopique B/H adapté au présent procédé. Les images SAR de référence 12, 14 peuvent donc être sélectionnées dans une base de données d'image SAR selon les critères requis d'angle stéréoscopique B/H et de couverture au sol par rapport au modèle numérique d'élévation 10.

De manière alternative, lorsque le modèle numérique d'élévation 10 a été obtenu par un procédé d'interférométrie radar, l'une des images SAR de référence 12 peut être l'une des images du couple interférométrique d'images SAR dont est issu le modèle numérique d'élévation 10. Dans cette hypothèse, on ne peut pas utiliser l'autre image du couple interférométrique à cause du faible angle stéréoscopique B/H responsable de l'incertitude du modèle numérique d'élévation 10.

Selon la figure 2, le procédé de calage géométrique d'un modèle numérique d'élévation 10 comprend la sélection d'au moins une aire d'intérêt 18 dénommée communément selon l'acronyme AOI selon la terminologie anglo-saxonne 'area of interest', sur la zone commune 15 à la zone de chevauchement 16, 17 des au moins deux images SAR de référence 12, 14 avec le modèle numérique d'élévation 10 c'est-à-dire sur la zone constituée par l'intersection de l'emprise au sol des au moins deux images SAR de référence 12, 14 avec l'emprise au sol du modèle numérique d'élévation 10.

Le nombre d'aires d'intérêt 18 nécessaire au procédé de calage géométrique d'un modèle numérique d'élévation 10 peut dépendre de la complexité de la déformation au sol engendrée par les erreurs du modèle numérique d'élévation 10 que l'on prévoit d'observer. Une sélection d'une seule aire d'intérêt 18 peut suffire à estimer une translation du modèle numérique d'élévation 10 dans les trois dimensions de l'espace En d'autres termes, un simple décalage peut être mesuré avec une seule aire d'intérêt.

Si le ou les capteurs ayant permis l'acquisition des images à l'origine du modèle numérique d'élévation 10 ont été soumis à un plus grand nombre de degrés de liberté de mouvement engendrant des déformations complexes sur chaque image, il est alors avantageux d'effectuer la sélection d'une pluralité d'aires d'intérêt 18, 20. En d'autres termes, un plus grand nombre de degrés de liberté engendre des déformations plus complexes dont la mesure nécessite plus d'aires d'intérêt 18, 20 indépendantes. À titre d'exemple non limitatif, dans le cas d'un modèle numérique d'élévation 10 issu d'un couple interférométrique les variations d'orientation de la base interférométrique pouvant engendrer des déformations évoluant le long de l'axe Nord-Sud, la sélection d'au moins une aire d'intérêt 18 par intervalle de cinquante kilomètres et selon cet axe Nord -Sud peut être nécessaire.

La sélection de l'au moins une aire d'intérêt 18 peut être réalisée aussi bien par un opérateur que de manière automatique. La sélection d'aires d'intérêt peut prendre en compte la nature du terrain, notamment, par exemple et de manière non limitative, de sorte à éviter les plans d'eau, l'énergie électromagnétique rétrodiffusée des radars à synthèse d'ouverture sur les plans d'eau n'étant pas prévisible.

Le mode de sélection d'au moins une aire d'intérêt 18 n'exclut pas l'alternative selon laquelle une unique aire d'intérêt représentative de l'ensemble de la zone commune 15 peut être sélectionnée.

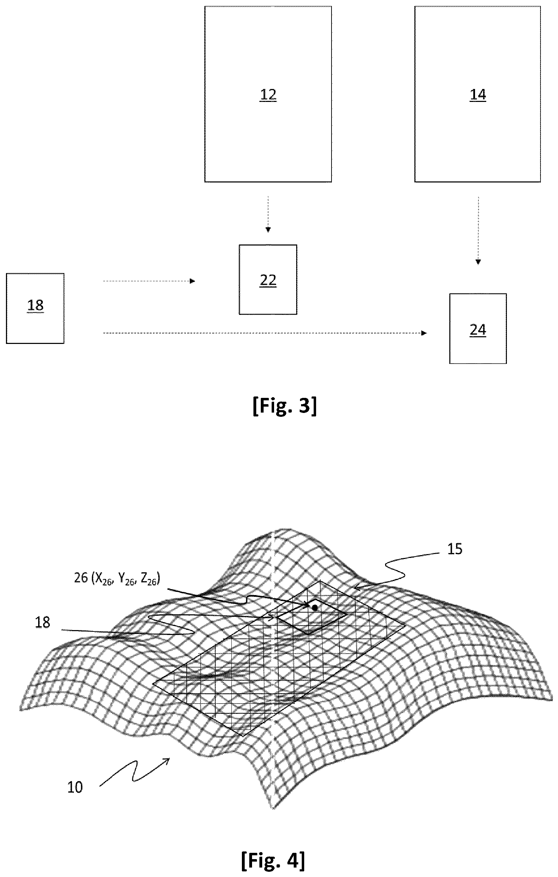

Selon la figure 3, le procédé de calage géométrique d'un modèle numérique d'élévation 10 nécessite la détermination pour les au moins deux images SAR de référence 12, 14 d'au moins deux images SAR simulée 22, 24 correspondant aux au moins deux images SAR de référence 12, 14, sur l'au moins une aire d'intérêt 18 sélectionnée et à partir des paramètres d'acquisition de chacune des au moins deux images SAR de référence 12, 14. Plus particulièrement, selon la figure 3, les paramètres d'acquisition de chacune des au moins deux images SAR de référence 12, 14 en association avec l'au moins une aire d'intérêt 18 sélectionnée sur la zone commune 15 à la zone de chevauchement 16, 17 des au moins deux images SAR de référence 12, 14 avec le modèle numérique d'élévation 10 permettent la détermination des au moins deux images SAR simulées 22, 24.

La détermination de chacune des images SAR simulée 22 prend en compte le fait que l'énergie électromagnétique moyenne rétrodiffusée sur la surface du terrain modélisée par le modèle numérique d'élévation 10 dépend de l'angle d'incidence du capteur radar SAR de l'image SAR de référence 12 sur le terrain modélisé par le modèle numérique d'élévation 10 selon une configuration géométrique du capteur radar SAR. En d'autres termes, l'énergie électromagnétique moyenne rétrodiffusée dépend également de l'orientation du terrain modélisé par le modèle numérique d'élévation 10 par rapport au front d'onde incident qu'aurait émis le capteur radar SAR. Plus particulièrement, connaissant l'aire d'intérêt 18 et la configuration géométrique du capteur radar SAR au regard du terrain modélisé, l'énergie électromagnétique moyenne rétrodiffusée par tout élément de surface du terrain modélisé par le premier modèle numérique d'élévation 10, c'est-à-dire le rayonnement de l'onde radar qu'aurait émis le capteur radar SAR sur la surface du terrain modélisée, peut être calculée à une constante multiplicative près. Il est également à noter qu'une représentation triangulée suffisamment fine du relief modélisé par le modèle numérique d'élévation 10, permet de simuler fidèlement l'interaction onde/surface et sa représentation dans chacune des images SAR simulée 22.

À cet effet, l'énergie rétrodiffusée enregistrée dans une image SAR de référence 12 dépend d'un coefficient fortement lié à l'angle de l'onde incidente du capteur radar SAR sur le terrain, le coefficient étant déterminé selon la formule suivante, $\frac{C \times R}{\sin(i)}$, formule selon laquelle i représente l'angle de l'onde incidente sur le terrain modélisé par le premier modèle numérique d'élévation 10, 'C' est un facteur de proportionnalité dépendant des caractéristiques du capteur radar SAR telles que, par exemple et de manière non limitative, la distance entre le capteur radar SAR et le terrain, ainsi que le gain d'antenne, R représente la réflectance de la surface du terrain au point considéré. Selon l'invention, il conviendra d'estimer un facteur R de réflectance constant sur l'ensemble du terrain représenté par le modèle numérique d'élévation 10. Plus particulièrement, le facteur R de réflectance utilisé pour le calcul de chaque image SAR simulée 22, 24 est un facteur de réflectance moyen de l'image SAR de référence 12 calculé sur toute l'emprise de l'image SAR simulée 22 c'est-à-dire sur l'aire d'intérêt 18 considérée pour le calcul de ladite image SAR simulée 22.

Le procédé de calage géométrique d'un modèle numérique d'élévation 10 nécessite l'estimation d'un décalage géométrique di, dj de chaque image SAR simulée 22 par rapport à chaque image SAR de référence 12 correspondant, c'est-à-dire par rapport à chaque image SAR de référence 12 utilisée pour le calcul de chaque image SAR simulée 22.

Il est connu de l'art antérieur de pouvoir estimer le décalage géométrique entre deux images comprenant une zone de chevauchement selon une approche par produit de corrélation entre les deux images. La mise en application de l'approche par produit de corrélation est une approche générique s'appliquant aussi bien aux images optiques qu'aux images radars.

Selon l'invention, de préférence une nouvelle méthode ou nouveau procédé d'estimation de chaque décalage di, dj entre chaque image SAR simulée 22 et son image SAR de référence 12 correspondant, dans le référentiel $O_{sar\_ref1}$, $I_{sar\_ref1}$, $J_{sar\_ref1}$ de chaque image SAR de référence 12 correspondant a été développée. Cette approche est particulièrement adaptée dans le cadre d'images SAR 12, 14.

À cet effet, le nouveau procédé d'estimation du décalage di, dj selon l'invention comprend une estimation du décalage géométrique di, dj par maximisation de la probabilité conditionnelle du décalage di, dj connaissant l'image SAR de référence 12. On notera la probabilité conditionnelle du décalage géométrique di, dj connaissant l'image SAR de référence 12 par $P(di, dj/SAR)$. Selon le théorème de Bayes, la probabilité conditionnelle du décalage géométrique di, dj connaissant l'image SAR de référence 12 se calcule selon la formule :

$$P(di, dj/SAR) = P(SAR/di, dj) * P(di, dj) \,/\, P(SAR) \qquad (1)$$

Dans le contexte de l'invention, on suppose la probabilité à priori $P(di, dj)$ constante sur un intervalle fini [-i, +i][-j, +j], la probabilité a priori $P(di, dj)$ étant nulle au-delà des bornes de l'intervalle fini. Les bornes de l'intervalle fini [-i, +i][-j, +j] sont déterminées par l'incertitude maximale sur la localisation du modèle numérique d'élévation 10. Elles représentent les bornes d'un rectangle englobant la projection, pour chaque image SAR de référence 12, 14 du volume d'incertitude du modèle numérique d'élévation 10 supposée équirépartie et indépendante sur les trois axes du modèle numérique d'élévation 10.

Cette incertitude maximale à priori est traduite en décalage maximum de l'image SAR simulée 22 grâce à la fonction de localisation de l'image SAR de référence 12, c'est-à-dire grâce à la projection du terrain modélisé par le modèle numérique d'élévation 10 dans l'image SAR de référence 12.

Dans le contexte de l'invention, on remarque également que la probabilité à priori $P(SAR)$ ne dépend pas du décalage géométrique di, dj. Cela revient à dire que l'opération consistant à maximiser la probabilité conditionnelle $P(di, dj/SAR)$ du décalage géométrique di, dj connaissant l'image SAR de référence 12 est donc équivalente à maximiser $P(SAR/di, dj)$ sur l'intervalle fini [-i, +i][-j, +j] préalablement défini. Cette dernière probabilité conditionnelle $P(SAR/di, dj)$ revient à estimer la probabilité de l'image SAR de référence 12, connaissant l'espérance statistique de l'énergie rétrodiffusée en chaque pixel. Il est à noter que l'espérance de l'énergie rétrodiffusée a été déterminée à priori pour chaque pixel lors de la détermination de l'image SAR simulée 12 depuis le modèle numérique d'élévation 10.

Par conséquence, sachant que les fluctuations résiduelles sont statistiquement indépendantes d'un pixel l'image SAR de référence 12 à l'autre, on peut décomposer la probabilité conditionnelle $P(SAR/di, dj)$ selon la formule suivante représentative du produit des probabilités $P_{a_i}$ des espérances statistiques de l'énergie rétrodiffusée $a_i$ pour chaque pixel i de l'image SAR simulée 22:

$$P(SAR/di, dj) = \prod_i P_{a_i}(v_i) \ (2)$$

Selon la formule, $v_i$ représente l'amplitude du pixel i de l'image SAR de référence 12. Il est à noter que la distribution $P_a(v)$ est bien décrite par une loi de Nakagami, et pour une image SAR, dite image SAR multi vue, c'est-à-dire selon la terminologie anglo-saxonne 'multi-look' ou encore N Looks, cette loi est donnée par la formule :

$$P_a(v) = 2v^{2N-1}e^{-Nv^2/a}\frac{N^N}{(a^N(N-1)!)} \ (3)$$

. Dans le cas particulier d'une image 'single-look', cette expression se réduit à la loi bien connue de Rayleigh dont la formule est :

$$P_a(v) = \frac{2ve^{-v^2/a}}{a} \qquad\qquad (4)$$

L'estimation du décalage géométrique ou correction géométrique di, dj pour l'aire d'intérêt 18, revient alors à déterminer la valeur maximale parmi toutes les valeurs de la probabilité conditionnelle *P(SAR/di, dj)* calculée sur l'intervalle [-i, +i][-j, +j] préalablement prédéfini.

Il est à noter que l'image SAR de référence 12 utilisée par le présent procédé peut être indifféremment une image SAR simple vue ou une image SAR multi-vue. L'image SAR multi-vue étant une technique de traitement à postériori d'une image radar permettant de réduire la présence d'un bruit multiplicatif dans l'image, appelé chatoiement (en anglais speckle), dû à la nature du signal radar mesuré par le capteur au moment de l'acquisition.

Selon la figure 4, le procédé de calage géométrique du modèle numérique d'élévation 10 nécessite une sélection d'au moins un point tridimensionnel 26 dit point de calage, sur l'au moins une aire d'intérêt sélectionnée 18 à partir du modèle numérique d'élévation 10. Selon la figure 4, l'au moins un point de calage 26 sélectionné sur le modèle numérique d'élévation 10 comporte des coordonnées 3D $X_{26}$, $Y_{26}$, $Z_{26}$ relatives au référentiel du modèle numérique d'élévation 10.

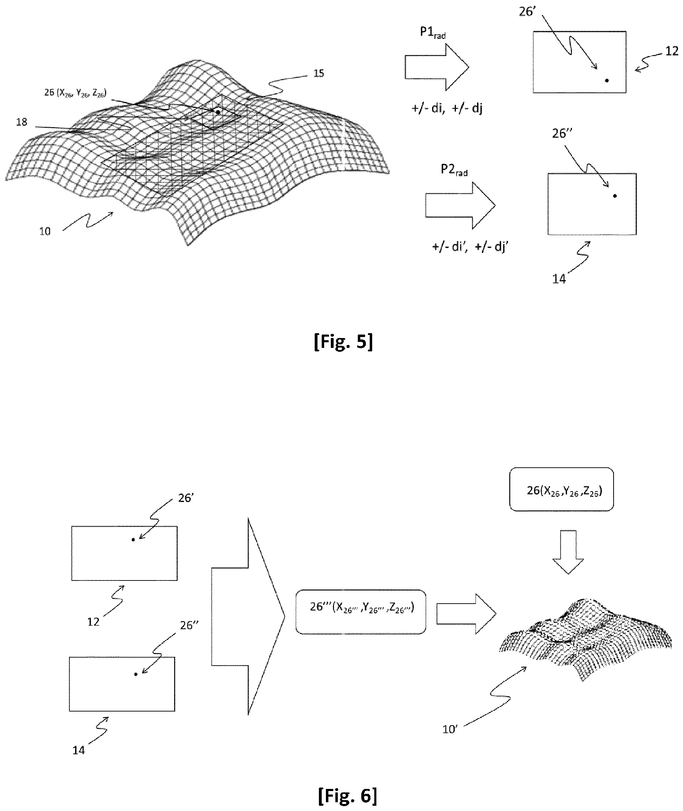

Selon la figure 5, le procédé de calage géométrique du modèle numérique d'élévation 10 nécessite la détermination d'au moins un point de liaison sur chacune des au moins deux images SAR de référence 12, 14, à partir du au moins un point de calage 26 sélectionné sur l'au moins une aire d'intérêt 18.

À cet effet, pour chacune des au moins deux image SAR de référence 12, 14, une fonction de projection radar $P1_{rad}$, $P2_{rad}$ est définie, les au moins deux fonctions de projection radar $P1_{rad}$, $P2_{rad}$ prenant en compte les paramètres d'acquisition radar, tel que par exemple et de manière non limitative la trajectoire du capteur radar SAR, ayant permis l'acquisition de chacune des au moins deux images SAR de référence 12, 14 correspondants. Chaque fonction de projection radar $P1_{rad}$, $P2_{rad}$ permet de déterminer au moins un points de liaison radar pour chacune des au moins deux images SAR de référence 12, 14. Selon l'invention, l'application du décalage géométrique di, dj de chacune des au moins deux images SAR simulée 22, 24 par rapport à chacune des au moins deux images SAR de référence 12, 14 sur les coordonnées du au moins un point de liaison radar de chacune des au moins deux images SAR de référence 12, 14 permet d'obtenir les coordonnées $i_{sar\_ref1\_26'}$, $j_{sar\_ref1\_26'}$, $i_{sar\_ref2\_26''}$, $j_{sar\_ref2\_26''}$ de au moins un point de liaison, dit au moins un point de liaison radar corrigés 26', 26'' dans chacune des au moins deux images SAR de référence 12, 14 nécessaire au procédé de calage géométrique du modèle numérique d'élévation 10.

Selon la figure 5, le procédé de calage géométrique du modèle numérique d'élévation 10 a permis de déterminer la correspondance du au moins un point de calage 26 sélectionné sur le modèle numérique d'élévation 10 et, dans le référentiel de chacun des au moins deux images SAR de référence 12, 14.

Selon la figure 6, le procédé de calage géométrique du modèle numérique d'élévation 10 comprend finalement le calcul des coordonnées terrain du au moins un point de calage 26 par application d'un processus de triangulation classique par stéréoscopie appliqué aux au moins deux images radar de référence 12, 14 à partir du au moins un point de liaison corrigé 26', 26'' dans chacune des au moins deux images SAR de référence 12, 14.

A l'issue du processus classique de triangulation radar à partir du au moins un point de liaison corrigé 26', 26'' des au moins deux images SAR de référence 12, 14, au moins un point de calage dotés de coordonnées 3D dans l'espace objet dont la précision résulte de celles des fonctions de localisation des au moins deux images SAR de références 12, 14 utilisées est obtenu. On parle alors de au moins un point d'appui 26''' conformément aux conventions de nommage en photogrammétrie numérique.

La comparaison entre les coordonnées $X_{26}$, $Y_{26}$, $Z_{26}$, du au moins un point de calage 26 sélectionné dans le référentiel du modèle numérique d'élévation 10 et les coordonnées terrains $X_{26'''}$, $Y_{26'''}$, $Z_{26'''}$ du au moins un nouveaux point triangulé ou points d'appui 26'''c'est-à-dire les coordonnées terrain du au moins un point de calage, permet de corriger les déformations du modèle numérique d'élévation 10 par une transformation en fonction des écarts constatés et, ainsi, augmenter la précision absolue du modèle numérique d'élévation 10. En d'autres termes, la comparaison entre les coordonnées $X_{26}$, $Y_{26}$, $Z_{26}$ du au moins un point de calage 26 sélectionné dans le référentiel du modèle numérique d'élévation 10 et les coordonnées terrains $X_{26'''}$, $Y_{26'''}$, $Z_{26'''}$ du au moins un nouveau point triangulé ou point d'appui 26''' permet de recaler le modèle numérique d'élévation 10, et donc d'obtenir un nouveau modèle numérique d'élévation 10' comportant une précision absolue améliorée en comparaison avec le modèle numérique d'élévation 10 initial.

Dans le cas d'un modèle numérique d'élévation 10 homogène, obtenu à partir d'un couple seul interférométrique ou stéréoscopique, les écarts induits par une estimation imparfaite des conditions de prise de vue sont, localement, modélisables par des transformations linéaires simples, comme par exemple et de manière non limitative, une translation ou un basculement. On peut donc, à partir des écarts observés entre les coordonnées $X_{26}$, $Y_{26}$, $Z_{26}$ du au moins un point de calage 26 sélectionné dans le référentiel du modèle numérique d'élévation 10 et les coordonnées $X_{26'''}$, $Y_{26'''}$, $Z_{26'''}$ du au moins un point d'appui 26''' estimer numériquement les paramètres de cette transformation par minimisation aux moindres carrés. Si l'étendue du modèle numérique d'élévation 10 est importante et est le produit d'acquisitions interférométriques ou stéréoscopiques de longue durée, il faut prendre en compte l'évolution dynamique des paramètres de prise de vue, et considérer une transformation plus complexe, polynomiale par exemple.

Dans le cas d'un modèle numérique d'élévation 10 résultant d'une mosaïque de modèle numérique d'élévation 10 élémentaires issus de données hétérogènes, il faut envisager une transformation ayant plus de degrés de liberté, par exemple et de manière non limitative, de type polynomial ou spline.

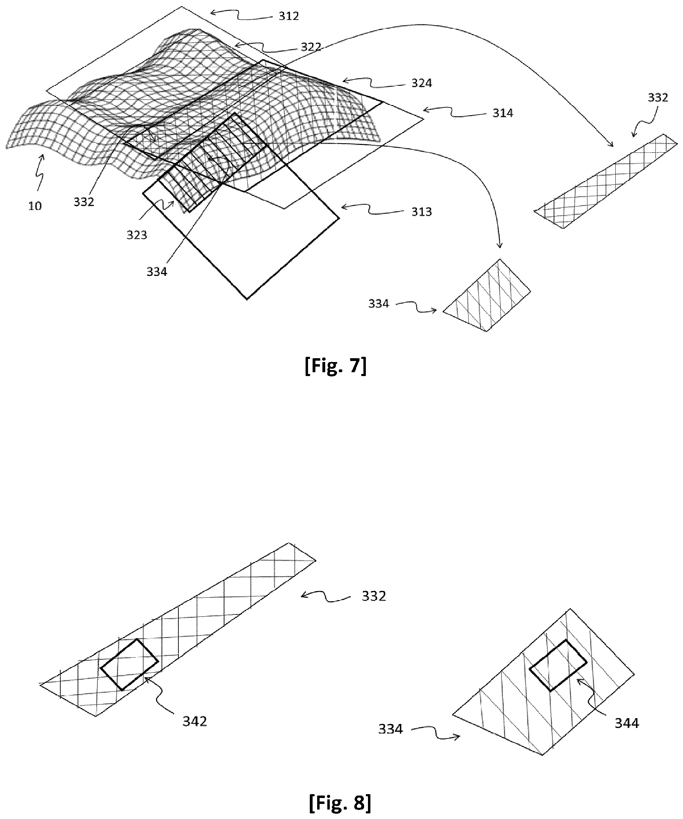

Selon les figures 7 à 12, un exemple non limitatif du procédé 100 de calage géométrique du modèle numérique d'élévation à partir de trois images SAR de référence 312, 313, 314 est illustré.

A cet effet, selon la figure 7, chacune des trois images SAR de référence 312, 313, 314 comprend une zone de chevauchement 322, 323, 324 avec le modèle numérique d'élévation 10. Chacune des trois images SAR de référence 312, 313, 314 comporte une zone commune 332, 334 à la zone de chevauchement 322, 323, 324 avec l'emprise au sol d'au moins une autre des autres images des trois images SAR de référence 312, 313, 314 et avec le modèle numérique d'élévation 10. Plus particulièrement, selon la figure 7, une première image SAR de référence 312 comporte une première zone commune 332 avec une seconde image SAR de référence 314, ladite seconde image SAR de référence 314 comprenant également une seconde zone commune 334 avec une troisième image SAR de référence 313.

Selon la figure 8, une aire d'intérêt 342 a été sélectionnée sur le modèle numérique d'élévation 10 dans la première zone commune 332 entre la zone de chevauchement 322 de la première image SAR de référence 312 et la zone de chevauchement 324 de la seconde image SAR de référence 314, une autre aire d'intérêt 344 a été sélectionnée sur le modèle numérique d'élévation 10 dans la seconde zone commune 334 entre la zone de chevauchement 324 de la seconde image SAR de référence 314 et la zone de chevauchement 323 de la troisième image SAR de référence 313,

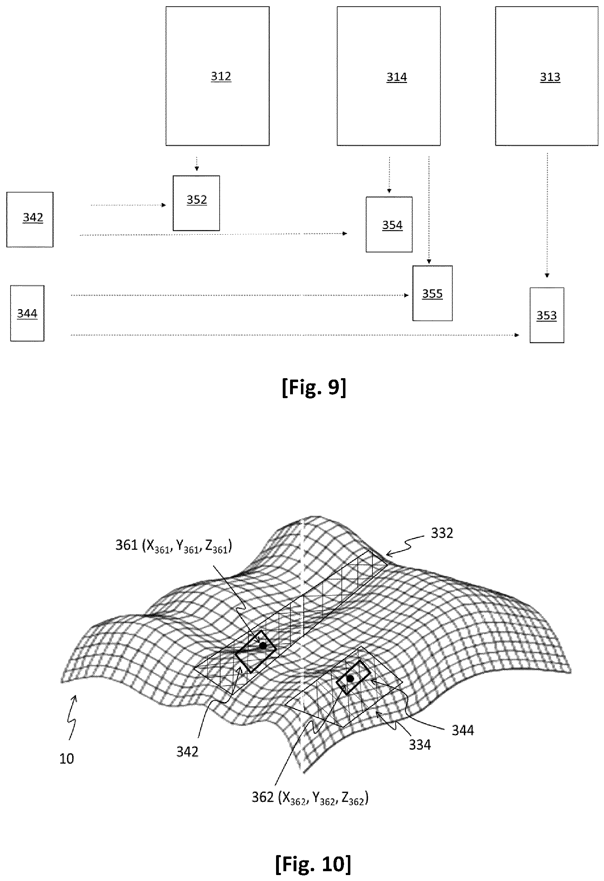

Selon la figure 9, les paramètres d'acquisition de la première image SAR de référence 312 et de la seconde image SAR de référence 314 en association avec l'aire d'intérêt 342 sélectionnée sur la première zone commune 332 permet la détermination d'une première image SAR simulée 352 et d'une seconde image SAR simulée 354 correspondante chacune à la première image SAR de référence 312 et à la seconde image SAR de référence 314. Les paramètres d'acquisition de la seconde image SAR de référence 314 et de la troisième image SAR de référence 313 en association avec l'aire d'intérêt 344 sélectionnée sur la seconde zone commune 334 permet la détermination d'une troisième image SAR simulée 355 et d'une quatrième image SAR simulée 353 correspondante chacune à la seconde image SAR de référence 314 et à la troisième image SAR de référence 313. Il est à noter que la seconde image SAR de référence 314 comprend deux images SAR simulées 354, 355 distinctes, l'une étant issu de la première zone commune 332, l'autre étant issu de la seconde zone commune 334.

Un décalage géométrique di, dj peut être estimé entre chacune des images radar simulée 352, 353, 354, 355 et leur image radar de référence 312, 313, 314 correspondante. En d'autres termes, selon cet exemple, un premier décalage géométrique di, dj peut être estimé entre la première image SAR simulée 352 et la première image SAR de référence 312, un second décalage géométrique di', dj' peut être estimé entre la seconde image SAR simulée 354 et la seconde image SAR de référence 314, un troisième décalage géométrique di", dj" peut être estimé entre la troisième image SAR simulée 355 et la seconde image SAR de référence 314, enfin un quatrième décalage géométrique di''', dj''' peut être estimé entre la quatrième image SAR simulée 353 et la troisième image SAR de référence 313.

Selon la figure 10, la sélection d'un premier point de calage 361, sur l'aire d'intérêt sélectionnée 342 dans la première zone commune 332 et la sélection d'un second point de calage 362, sur l'aire d'intérêt sélectionnée 344 dans la seconde zone commune 334 sont représentées. Selon la figure 10, le premier point de calage 361 sélectionné sur le modèle numérique d'élévation 10 comporte des coordonnées 3D $X_{361}$, $Y_{361}$, $Z_{361}$ relatives au référentiel du modèle numérique d'élévation 10, et le second point de calage 362 sélectionné sur le modèle numérique d'élévation 10 comporte des coordonnées 3D $X_{362}$, $Y_{362}$, $Z_{362}$ relatives au référentiel du modèle numérique d'élévation 10.

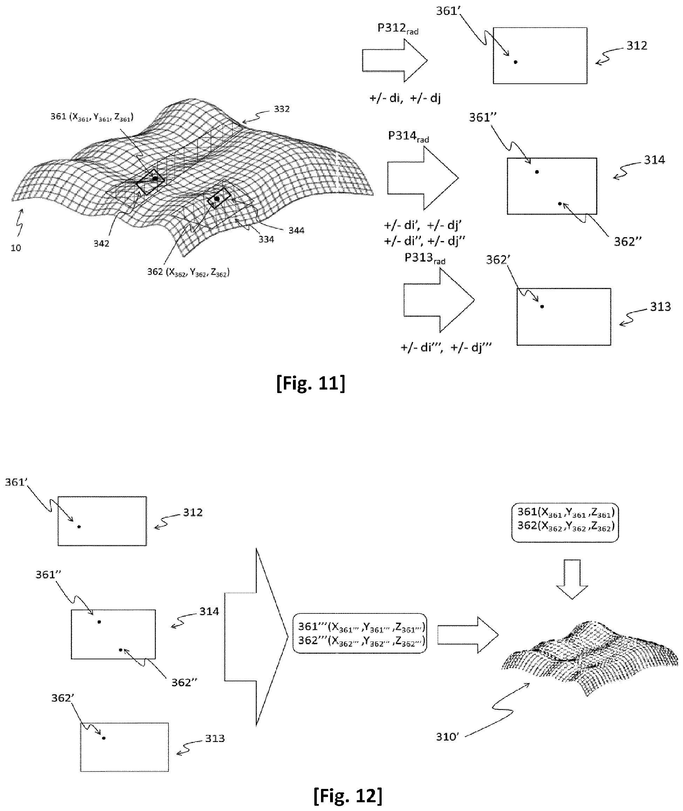

Selon la figure 11, trois fonctions de projection radar $P312_{rad}$, $P314_{rad}$, $P313_{rad}$ associées aux trois images SAR de référence 312, 314, 313 permettent chacune la projection du ou des points de calages 361, 362 dans l'image SAR de référence 312, 314, 313 associée à la fonction de projection radar $P312_{rad}$, $P314_{rad}$, $P313_{rad}$. Plus particulièrement, le premier point de calage 361 est projetée dans la première image SAR de référence 312 et dans la seconde image SAR de référence 314 selon respectivement une première fonction de projection radar P312$_{rad}$ et une seconde fonction de projection radar P314$_{rad}$; le second point de calage 362 est projetée dans seconde image SAR de référence 314 et dans la troisième image SAR de référence 313 selon respectivement la seconde fonction de projection radar P314$_{rad}$ et une troisième fonction de projection radar P313$_{rad}$. Les trois projections radars P312$_{rad}$, P314$_{rad}$, P313$_{rad}$ permettent de déterminer quatre points de liaisons, dont une première paire de points de liaison correspondant au premier point de calage 361 projeté dans la première et dans la second image SAR de référence 312, 314, et dont une seconde paire de points de liaison correspondant au second point de calage 362 projeté dans la seconde et dans la troisième image SAR de référence 314, 313.

Selon la figure 11, l'application du décalage géométrique di, dj, di', dj', di", dj", di"', dj"' de chacune des quatre images SAR simulées 352, 353, 354, 355 par rapport à chacune de leur images SAR de référence 312, 313, 314 correspondant, sur les coordonnées du ou des points de liaison radar de chacune des trois images SAR de référence 312, 313, 314 permet d'obtenir des coordonnées, corrigés des points de liaison, dit points de liaison radar corrigés 361', 361", 362', 362" dans chacune des trois images SAR de référence 312, 313, 314 nécessaire au procédé de calage géométrique du modèle numérique d'élévation 10. Plus particulièrement, la première image SAR de référence 312 comprend un premier point de liaison corrigé 361' issu de la projection radar du premier point de calage 361 et de la correction géométrique di, dj entre la première image SAR simulée 352 et la première image SAR de référence 312, la seconde image SAR de référence 314 comprend un second point de liaison corrigé 361" issu de la projection radar du premier point de calage 361 et de la correction géométrique di', dj' entre la seconde image SAR simulée 354 et la seconde image SAR de référence 314. La seconde image SAR de référence 314 comprend également un troisième point de liaison corrigé 362" issu de la projection radar du second point de calage 362 et de la correction géométrique di", dj" entre la troisième image SAR simulée 355 et la seconde image SAR de référence 314. Enfin, la troisième image SAR de référence 313 comprend un quatrième point de liaison corrigé 362' issu de la projection radar du second point de calage 362 et de la correction géométrique di"', dj"' entre la quatrième image SAR simulée 353 et la troisième image SAR de référence 313.

Selon la figure 12, le procédé de calage géométrique du modèle numérique d'élévation 10 comprend finalement le calcul des coordonnées terrain du premier point de calage 361 et du second point de calage 362 par application du processus de triangulation classique par stéréoscopie appliquée aux trois images radar de référence 312, 313, 314 à partir des deux couples de point de liaisons corrigés 361', 361", 362', 362".

A l'issue du processus classique de triangulation radar à partir des deux couples de point de liaisons corrigés 361', 361", 362', 362", deux points de calage dotés de coordonnées 3D dans l'espace objet dont la précision résulte de celles des fonctions de localisation des trois images SAR de références 312, 313, 314 utilisées sont obtenus. On parle alors de point d'appuis 361"', 362"' conformément aux conventions de nommage en photogrammétrie numérique.

La comparaison entre les coordonnées $X_{361}$, $Y_{361}$, $Z_{361}$, $X_{362}$, $Y_{362}$, $Z_{362}$ des deux points de calage 361, 362 sélectionnés dans le référentiel du modèle numérique d'élévation 10 et les coordonnées terrains $X_{361'''}$, $Y_{361'''}$, $Z_{361'''}$, $X_{362'''}$, $Y_{269'''}$, $Z_{362'''}$ des deux nouveaux points triangulés ou points d'appuis 361"', 362"', permettent de corriger les déformations du modèle numérique d'élévation 10 par une transformation en fonction des écarts constatés et, ainsi, augmenter la précision absolue du modèle numérique d'élévation 10.

En d'autres termes, la comparaison entre les coordonnées $X_{361}$, $Y_{361}$, $Z_{361}$, $X_{362}$, $Y_{362}$, $Z_{362}$ des deux points de calage 361, 362 sélectionnés dans le référentiel du modèle numérique d'élévation 10 et les coordonnées terrains $X_{361'''}$, $Y_{361'''}$, $Z_{361'''}$, $X_{362'''}$, $Y_{362'''}$, $Z_{362'''}$ des deux nouveaux points triangulés ou points d'appuis 361"', 362"' permet de recaler le modèle numérique d'élévation 10, et donc d'obtenir un nouveau modèle numérique d'élévation 310' comportant une précision absolue améliorée en comparaison avec le modèle numérique d'élévation 10 initial.

Selon un autre exemple de réalisation, mettant en œuvre trois images SAR de référence, et non représenté par une figure, les trois images SAR de référence sont obtenues de façon à ce que leur zone de chevauchement dispose d'une zone commune aux trois images SAR de référence. Selon cet exemple, toute aire d'intérêt sélectionnée dans cette zone commune donne lieu au calcul d'une image SAR simulée par image SAR de référence sur la zone commune et selon les paramètres d'acquisition de chaque image SAR de référence. Selon ce même exemple, tout point de calage sélectionné sur cette zone commune dans le modèle numérique d'élévation est projeté dans les trois images SAR de référence et pour obtenir un point de liaison pour chacune des trois images SAR de référence. Et l'application du décalage géométrique calculé à partir de l'image SAR simulée et de son image SAR de référence sur chaque point de liaison de cette image donne lieu à un point de liaison radar corrigé.

Enfin, on peut également imaginer l'exécution du procédé avec un ensemble d'images SAR de référence disposant à la fois de zones communes à leur zone de chevauchement avec le modèle numérique d'élévation deux à deux et à la fois de zones communes avec plus de deux images.

Ces exemples présentés précédemment illustrent la flexibilité d'utilisation du procédé de calage d'un modèle numérique d'élévation en fonction du nombre et de la distribution géographique des images SAR de référence à disposition pour réaliser le calage. La multiplicité de configurations possibles entre le nombre de zones communes aux images SAR de référence, le nombre d'aires d'intérêt par zone commune et le nombre de points de calage sélectionnés permet d'obtenir autant de points de liaison corrigés dans chaque image SAR utilisée qui donnent lieu à autant de coordonnées terrain recalées permettant d'affiner la précision du calage final du modèle numérique d'élévation.

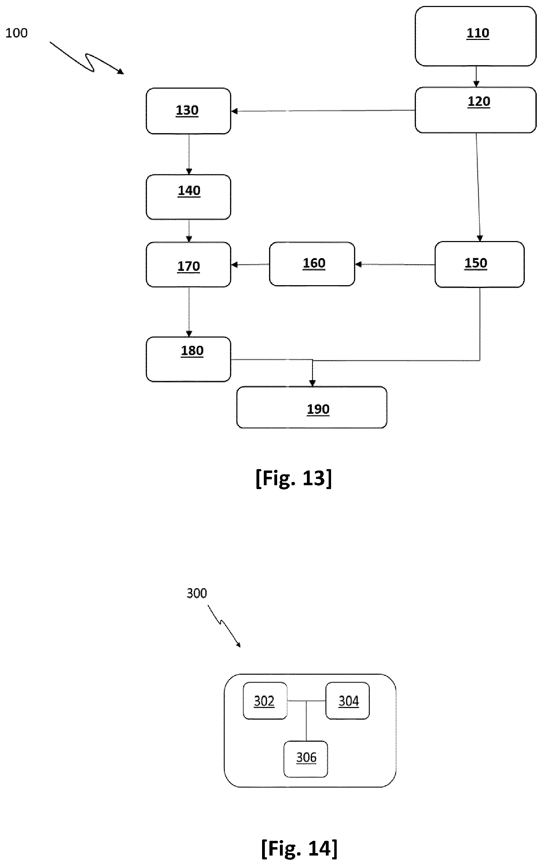

Selon la figure 13 le procédé 100 de calage géométrique d'un modèle numérique d'élévation 10 décrit aux figures 1 à 12 précédentes peut par exemple et de manière non limitative comprendre une pluralité d'étapes.

Le procédé 100 doit comprendre une étape d'obtention 110 d'au moins deux images SAR de référence 12, 14, l'emprise au sol de chaque image SAR de référence 12, 14 comportant une zone commune 15 à la zone de chevauchement 16,17 avec l'emprise au sol d'au moins une autre des au moins deux images SAR de référence 12, 14 et avec le modèle numérique d'élévation 10.

Chacune des au moins deux image SAR de référence 12, 14 comporte donc une zone de chevauchement 16, 17 avec le modèle numérique d'élévation 10. En d'autres termes, l'emprise au sol de chacune des au moins deux images SAR de référence 12, 14 recouvre en totalité ou partiellement, la surface du terrain représentée par le modèle numérique d'élévation 10 de sorte qu'une zone de chevauchement 16 correspondant à l'intersection entre l'emprise au sol d'une image SAR de référence 12 et la zone géographique couverte par le modèle numérique d'élévation 10 est définie.

Le procédé comporte de plus, pour chaque image SAR de référence 12, 14 obtenues les étapes suivantes : la sélection 120 d'au moins une aire d'intérêts 18 sur la zone commune 15 ; le calcul 130 d'une image radar simulée 22 sur l'au moins une aire d'intérêt 18 sélectionnée à partir des paramètres d'acquisition de l'image SAR de référence 12 ; l'estimation 140 d'un décalage géométrique di, dj entre l'images radar simulée 22 et l'image radar de référence 12.

Le procédé 100 comprend ensuite les étapes suivantes : la sélection 150 d'au moins un point de calage 26 sur l'au moins une aire d'intérêt sélectionnée 18 à partir du modèle numérique d'élévation 10, l'au moins un point de calage 26 comportant des coordonnées $X_{26}$, $Y_{26}$, $Z_{26}$ selon le référentiel du modèle numérique d'élévation 10; la projection 160 dudit au moins un point de calage 26 dans chacune des au moins deux images SAR de référence 12,14 par une fonction de projection radar $P1_{rad}$, $P2_{rad}$ relative à chaque image de sorte à obtenir au moins un point de liaison radar relatif à chacune des au moins deux images SAR de référence 12,14; la correction 170 du au moins un point de liaison radar de chacune des au moins deux images SAR de référence 12,14 par application dudit décalage géométrique di, dj estimé pour chacune des images SAR de référence 12, 14 de sorte à obtenir au moins un point de liaison radar corrigé 26', 26" relatif à chaque image SAR de référence 12,14; la calcul 180 des coordonnées terrain recalées $X_{26'''}$, $Y_{26'''}$, $Z_{26'''}$ du au moins un point de calage 26 sélectionné selon un processus de triangulation du au moins un point de liaison corrigé 26', 26" relatif à chaque image SAR de référence 12, 14; et le calage 190 géométrique du modèle numérique d'élévation 10 par transformation en fonction des écarts constatés entre les coordonnées terrain recalées $X_{26'''}$, $Y_{26'''}$, $Z_{26'''}$ et les coordonnées terrain $X_{26}$, $Y_{26}$, $Z_{26}$ dans le référentiel du modèle numérique d'élévation 10.

Il conviendra selon le modèle numérique d'élévation 10, c'est-à-dire selon que le modèle numérique d'élévation 10 est de type homogène ou hétérogènes, d'adapter la transformation à appliquer, c'est-à-dire soit une transformation de type linéaire simple, comme par exemple et de manière non limitative, par translation, par basculement ou par rotation, ou encore une transformation ayant plus de degrés de liberté, par exemple et de manière non limitative, de type de type équation polynomiale représentative d'une surface molle ou de type spline.

De manière alternative, le modèle numérique d'élévation 10 peut être issu d'un couple interférométrique d'images radar à synthèse d'ouverture et l'une des images de ce couple interférométrique est retenue lors de l'étape 110 d'obtention d'au moins deux images SAR de référence 12, 14. Dans ce cas particulier, il est possible, de manière optionnelle, de limiter les étapes du procédé 130 à 140 uniquement aux autres images radar de référence 14 des au moins deux images radar de référence 12, 14 obtenues, c'est-à-dire les images SAR de références 14 non constitutives du couple interférométrique. En effet, pour des modèles numériques d'élévation 10 obtenus par interférométrie radar, le décalage entre une image SAR simulée 22 et une image SAR de référence 12 constitutive du couple interférométrique étant à priori nul, il n'est pas nécessaire d'exécuter les étapes du procédé 100 correspondant au calcul de l'image SAR simulée 22 et d'estimation du décalage entre l'image SAR simulée 22 et l'image SAR de référence 12 pour cette image SAR de référence 12. Selon ce mode optionnel de réalisation, l'étape de correction 170 du au moins un point de liaison radar de l'image SAR de référence 12 constitutive du couple interférométrique consiste à appliquer un décalage géométrique di, dj nul afin d'obtenir le au moins un point de liaison radar corrigé pour cette image.

Selon la figure 14, un système 300 de mise en œuvre du procédé 100 de calage géométrique d'un modèle numérique d'élévation 10 peut comprendre une unité de traitement d'informations 302 de type processeur tel que par exemple et de manière non limitative, un processeur spécialisé dans le traitement du signal, ou encore un microcontrôleur, ou tout autre type de circuit permettant d'exécuter des instructions de type logicielles. Le système 300 comporte également de la mémoire vive 304 associée à l'unité de traitement d'informations 302. L'unité de traitement d'informations 302 est configurée pour exécuter un programme, dit encore programme d'ordinateur, comprenant des instructions mettant en œuvre le procédé 100 de calage géométrique d'un modèle numérique d'élévation 10 décrit précédemment. Les instructions sont chargées dans la mémoire vive du système 300 à partir de tout type de supports de stockage 306 tels que par exemple et de manière non limitative, une mémoire de type non volatile ou une mémoire externe telle qu'une carte mémoire amovible de stockage. Les instructions peuvent être également chargées par l'intermédiaire d'une connexion à un réseau de communication.

Alternativement, le programme d'ordinateur, comprenant des instructions mettant en œuvre le procédé 100 de calage géométrique d'un modèle numérique d'élévation peut également être implémenté sous forme matérielle par une machine ou par un circuit intégré propre à une application ou encore par un circuit électronique de type réseau logique programmable.

Il doit être bien entendu que la description détaillée de l'objet de l'invention, donnée uniquement à titre d'illustration, ne constitue en aucune manière une limitation, l'objet de la présente demande étant défini par les revendications en annexe.

**Revendications**

1. Procédé de calage géométrique (100) d'un modèle numérique d'élévation (10) de la surface de la Terre **caractérisé en ce qu'**il comprend une première étape de :

   obtention (110) d'au moins deux images radar à synthèse d'ouverture dites images radar de référence (12, 14), l'emprise au sol de chaque image radar de référence (12, 14) comportant une zone commune (15) à la zone de chevauchement (16,17) avec l'emprise au sol d'au moins une autre des au moins deux images radar de référence (12, 14) et avec le modèle numérique d'élévation (10) ;

   le procédé (100) comportant de plus, pour chaque image radar de référence (12,14), des étapes de :

   sélection (120) d'au moins une aire d'intérêt (18) sur la zone commune (15);
   calcul (130) d'une image radar simulée (22) sur l'au moins une aire d'intérêt (18) sélectionnée à partir des paramètres d'acquisition de l'image radar de référence (12);
   estimation (140) d'un décalage géométrique (di, dj) entre l'images radar simulée (22) et l'image radar de référence (12);

   le procédé (100) comprenant ensuite des étapes de

   sélection (150) d'au moins un point de calage (26) sur l'au moins une aire d'intérêt sélectionnée (18) à partir du modèle numérique d'élévation (10), l'au moins un point de calage (26) comportant des coordonnées ($X_{26}$, $Y_{26}$, $Z_{26}$) dans le référentiel du modèle numérique d'élévation (10);
   projection (160) dudit au moins un point de calage (26) dans chacune des au moins deux images radar de référence (12,14) par une fonction de projection radar ($P1_{rad}$, $P2_{rad}$) relative à chaque image de sorte à obtenir au moins un point de liaison radar relatif à chacune des au moins deux images radar de référence (12,14); correction (170) du au moins un point de liaison radar de chacune des au moins deux images radar de référence (12,14) par application dudit décalage géométrique (di, dj) estimé pour chacune des images radar de référence (12, 14) de sorte à obtenir au moins un point de liaison radar corrigé (26', 26") relatif à chaque image radar de référence (12,14);
   calcul (180) des coordonnées terrain recalées ($X_{26'''}$, $Y_{26'''}$, $Z_{26'''}$) du au moins un point de calage (26) par application d'un processus de triangulation par stéréoscopie appliqué auxdites au moins deux images radar de référence à partir du au moins un point de liaison corrigé (26', 26") relatif à chaque image radar de référence (12, 14); calage (190) géométrique du modèle numérique d'élévation (10) par transformation en fonction des écarts constatés entre les coordonnées terrain recalées ($X_{26'''}$, $Y_{26'''}$, $Z_{26'''}$) et les coordonnées terrain ($X_{26}$, $Y_{26}$, $Z_{26}$) dans le référentiel du modèle numérique d'élévation (10).

2. Procédé de calage (100) selon la revendication précédente **caractérisé en ce que** l'étape d'estimation (140) du décalage géométrique (di, dj) entre l'image radar simulée et l'image radar de référence comprend la maximisation de la probabilité conditionnelle $P(di, dj/SAR)$ du décalage (di, dj) connaissant l'image radar de référence (12) considérée.

3. Procédé de calage (100) selon l'une quelconque des revendications précédentes **caractérisé en ce que** l'étape de calcul (130) de l'image radar simulée (22) comprend la détermination d'un facteur de réflectance (R) moyen de l'image SAR de référence (12) calculé sur l'aire d'intérêt (18) considérée pour le calcul de ladite image SAR simulée (22).

4. Procédé de calage (100) selon l'une quelconque des revendications précédentes **caractérisé en ce que** chaque aire d'intérêt (18) sélectionnée représente une zone restreinte de la zone de commune (15).

5. Procédé de calage (100) selon l'une quelconque des revendications précédentes **caractérisé en ce que** l'étape de sélection (120) d'au moins une aire d'intérêt (18) est une sélection d'au moins une zone d'intérêt (18) par intervalle de cinquante kilomètres, selon un axe Nord -Sud.

**6.** Procédé de calage (100) selon l'une quelconque des revendications précédentes **caractérisé en ce que** lors de l'étape (110) d'obtention d'au moins deux images radar de référence (12,14), soient sélectionnées des images radar acquises par tout satellite radar à synthèse d'ouverture dans des directions de visée opposées.

**7.** Procédé de calage (100) selon l'une quelconque des revendications 1 à 6 **caractérisé en ce que** le modèle numérique d'élévation (10) est issu d'un couple interférométrique d'images radar à synthèse d'ouverture et **en ce que** l'une des images de ce couple interférométrique est retenue lors de l'étape (110) d'obtention d'au moins deux images radar de référence (12, 14).

**8.** Procédé de calage (100) selon la revendication précédente **caractérisé en ce que** :

les étapes (130) et (140) se rapportent uniquement aux autres images radar de référence (14) des au moins deux images radar de référence (12, 14) obtenues ;
et **en ce que** l'étape de correction (170) du au moins un point de liaison radar de l'images radar de référence (12) correspondant à une des images du couple interférométrique comporte un décalage géométrique (di, dj) nul

**9.** Système (300) de calage géométrique d'un modèle numérique d'élévation (10) pour la mise en œuvre du procédé (100) de l'une quelconque des revendications précédentes **caractérisé en ce qu'**il comporte une unité de traitement d'informations (302) et une mémoire vive (304) associée à l'unité de traitement d'informations (302), ladite mémoire vive (304) comprenant des instructions de mise en œuvre du procédé (100), ladite unité de traitement d'informations (302) étant configurée pour exécuter les instructions mettant en œuvre le procédé (100).

**10.** Produit programme d'ordinateur comprenant des instructions qui, lorsque le programme est exécuté par un ordinateur, conduisent celui-ci à mettre en œuvre les étapes du procédé (100) de calage géométrique d'un modèle numérique d'élévation (10) selon l'une quelconque des revendications 1 à 8.

**11.** Support de stockage (306) d'informations stockant un programme d'ordinateur comprenant des instructions pour implémenter, par un processeur (302), le procédé (100) selon l'une quelconque des revendications 1 à 8, lorsque ledit programme est lu et exécuté par ledit processeur (302).

## Patentansprüche

**1.** Verfahren zur geometrischen Ausrichtung (100) eines digitalen Höhenmodells (10) der Erdoberfläche, **dadurch gekennzeichnet, dass** es einen ersten Schritt umfasst:

Erhalten (110) von mindestens zwei Radarbildern mit synthetischer Apertur, sogenannten Referenzradarbildern (12, 14), wobei die Bodenfläche jedes Referenzradarbildes (12, 14) einen gemeinsamen Bereich (15) mit dem Überlappungsbereich (16, 17) mit der Bodenfläche mindestens eines anderen der mindestens zwei Referenzradarbilder (12, 14) und mit dem digitalen Höhenmodell (10) aufweist;
wobei das Verfahren (100), ferner für jedes Referenzradarbild (12,14) folgende Schritte aufweist:

Auswählen (120) mindestens eines Gebiets von Interesse (18) auf dem gemeinsamen Bereich (15);
Berechnen (130) eines simulierten Radarbilds (22) auf dem mindestens einen Gebiet von Interesse (18), das aus den Erfassungsparametern des Referenzradarbilds (12) ausgewählt wurde;
Schätzen (140) eines geometrischen Versatzes (di, dj) zwischen dem simulierten Radarbild (22) und dem Referenzradarbild (12);
wobei das Verfahren (100) anschließend folgende Schritte umfasst:

Auswählen (150) mindestens eines Ausrichtungspunktes (26) auf dem mindestens einen ausgewählten Gebiet von Interesse (18) aus dem digitalen Höhenmodell (10), wobei der mindestens eine Aus-richtungspunkt (26) Koordinaten $(X_{26}, Y_{26}, Z_{26})$ in dem Referenzsystem des digitalen Höhenmodells (10) aufweist;
Projizieren (160) des mindestens einen Ausrichtungspunktes (26) in jedes der mindestens zwei Referenzradarbilder (12,14) durch eine Radarprojektionsfunktion ($P1_{rad}$ $P2_{rad}$) bezogen auf jedes Bild, so dass mindestens ein Radarverbindungspunkt bezogen auf jedes der mindestens zwei Referenzradarbilder (12,14) erhalten wird;
Korrigieren (170) des mindestens einen Radarverbindungspunktes jedes der mindestens zwei Referenzradarbilder (12, 14) durch Anwendung des für jedes der Referenzradarbilder (12, 14) geschätzten geometrischen Versatzes (di, dj), so dass mindestens ein korrigierter Radarverbindungspunkt (26', 26") in Bezug auf jedes Referenzradarbild (12, 14) erhalten wird;

Berechnen (180) der neu ausgerichteten Geländekoordinaten ($X_{26'''}$, $Y_{26'''}$, $Z_{26'''}$) des mindestens einen Ausrichtungspunktes (26) durch Anwendung eines auf die mindestens zwei Referenzradarbilder angewandten stereoskopischen Triangulationsverfahrens ausgehend von dem mindestens einen korrigierten Verbindungspunkt (26', 26") bezogen auf jedes Referenzradarbild (12, 14);

geometrisches Ausrichten (190) des digitalen Höhenmodells (10) durch Transformation in Abhängigkeit von den festgestellten Abweichungen zwischen den neu ausgerichteten Geländekoordinaten ($X_{26'''}$, $Y_{26'''}$, $Z_{26'''}$) und den Geländekoordinaten ($X_{26}$, $Y_{26}$, $Z_{26}$) in dem Referenzsystem des digitalen Höhenmodells (10).

2. Verfahren zur Ausrichtung (100) nach dem vorhergehenden Anspruch, **dadurch gekennzeichnet, dass** der Schritt des Schätzens (140) des geometrischen Versatzes (di, dj) zwischen dem simulierten Radarbild und dem Referenzradarbild die Maximierung der bedingten Wahrscheinlichkeit $P(di,dj/SAR)$ des Versatzes (di, dj) umfasst, die das betrachtete Referenzradarbild (12) kennt.

3. Verfahren zur Ausrichtung (100) nach einem der vorhergehenden Ansprüche, **dadurch gekennzeichnet, dass** der Schritt des Berechnens (130) des simulierten Radarbildes (22) die Bestimmung eines durchschnittlichen Reflexionsfaktors (R) des Referenz-SAR-Bildes (12) umfasst, der auf dem für die Berechnung des simulierten SAR-Bildes (22) betrachteten Gebiet von Interesse (18) berechnet wird.

4. Verfahren zur Ausrichtung (100) nach einem der vorhergehenden Ansprüche, **dadurch gekennzeichnet, dass** jedes ausgewählte Gebiet von Interesse (18) einen eingeschränkten Bereich des gemeinsamen Bereichs (15) darstellt.

5. Verfahren zur Ausrichtung (100) nach einem der vorhergehenden Ansprüche, **dadurch gekennzeichnet, dass** der Schritt des Auswählens (120) von mindestens einem Gebiet von Interesse (18) eine Auswahl von mindestens einem Gebiet von Interesse (18) in Abständen von fünfzig Kilometern entlang einer Nord-Süd-Achse ist.

6. Verfahren zur Ausrichtung (100) nach einem der vorhergehenden Ansprüche, **dadurch gekennzeichnet, dass** bei dem Schritt (110) des Erhaltens von mindestens zwei Referenzradarbildern (12, 14) Radarbilder ausgewählt werden, die von jedem Radarsatelliten mit synthetischer Apertur in entgegengesetzten Blickrichtungen erfasst wurden.

7. Verfahren zur Ausrichtung (100) nach einem der Ansprüche 1 bis 6, **dadurch gekennzeichnet, dass** das digitale Höhenmodell (10) aus einem interferometrischen Paar von Radarbildern mit synthetischer Apertur stammt und dass eines der Bilder dieses interferometrischen Paares während des Schritts (110) zum Erhalten von mindestens zwei Referenzradarbildern (12, 14) ausgewählt wird.

8. Verfahren zur Ausrichtung (100) nach dem vorhergehenden Anspruch, **dadurch gekennzeichnet, dass**:

die Schritte (130) und (140) sich nur auf die anderen Referenzradarbilder (14) der mindestens zwei erhaltenen Referenzradarbilder (12, 14) beziehen;

und dass der Schritt des Korrigierens (170) des mindestens einen Radarverbindungspunkts des Referenzradarbildes (12), der einem der Bilder des interferometrischen Paares entspricht, einen geometrischen Versatz (di, dj) von null aufweist.

9. System (300) zur geometrischen Ausrichtung eines digitalen Höhenmodells (10) zur Durchführung des Verfahrens (100) nach einem der vorhergehenden Ansprüche, **dadurch gekennzeichnet, dass** es eine Informationsverarbeitungseinheit (302) und einen mit der Informationsverarbeitungseinheit (302) verbundenen Arbeitsspeicher (304) aufweist, wobei der Arbeitsspeicher (304) Anweisungen zur Durchführung des Verfahrens (100) umfasst, wobei die Informationsverarbeitungseinheit (302) so konfiguriert ist, um Anweisungen zur Durchführung des Verfahrens (100) auszuführen.

10. Computerprogrammprodukt, umfassend Anweisungen, die, wenn das Programm von einem Computer ausgeführt wird, dazu führen, dass dieser die Schritte des Verfahrens (100) zur geometrischen Ausrichtung eines digitalen Höhenmodells (10) nach einem der Ansprüche 1 bis 8 durchführt.

**11.** Informationsspeichermedium (306), das ein Computerprogramm speichert, das Anweisungen zum Implementieren des Verfahrens (100) nach einem der Ansprüche 1 bis 8 durch einen Prozessor (302) umfasst, wenn das Programm von dem Prozessor (302) gelesen und ausgeführt wird.

**Claims**

**1.** A method for georeferencing (100) a digital elevation model (10) of the Earth's surface comprising a first step of:

obtaining (110) at least two synthetic aperture radar images called reference radar images (12, 14), the footprint of each reference radar image (12, 14) including a zone (15) common to the zone (16, 17) of overlap with the footprint of at least one other of the at least two reference radar images (12, 14) and with the digital elevation model (10); the method (100) further including, for each reference radar image (12, 14), the steps of:

selecting (120) at least one area of interest (18) on the common zone (15);
calculating (130) a simulated radar image (22) on the at least one selected area of interest (18) from the acquisition parameters of the reference radar image (12);
estimating (140) a geometric offset (di, dj) between the simulated radar image (22) and the reference radar image (12);
the method (100) then comprising the steps of selecting (150) at least one referencing point (26) on the at least one selected area of interest (18) from the digital elevation model (10), the at least one referencing point (26) including coordinates $(X_{26}, Y_{26}, Z_{26})$ in the frame of reference of the digital elevation model (10)
projecting (160) said at least one referencing point (26) into each of the at least two reference radar images (12, 14) by a radar projection function $(P1_{rad}, P2_{rad})$ relating to each image so as to obtain at least one radar link point relating to each of the at least two reference radar images (12, 14);
correcting (170) the at least one radar link point of each of the at least two reference radar images (12, 14) by applying said geometric offset (di, dj) estimated for each of the reference radar images (12, 14) so as to obtain at least one corrected radar link point (26', 26") relating to each reference radar image (12, 14);
calculating (180) the reset terrain coordinates $(X_{26'''}, Y_{26'''}, Z_{26'''})$ of the at least one referencing point (26) by applying a stereoscopic triangulation process applied to said at least two reference radar images from the at least one corrected link point (26', 26") relating to each reference radar image (12, 14);
georeferencing (190) the digital elevation model (10) by transformation as a function of the deviations found between the reset terrain coordinates $(X_{26'''}, Y_{26'''}, Z_{26'''})$ and the terrain coordinates $(X_{26}, Y_{26}, Z_{26})$ in the frame of reference of the digital elevation model (10).

**2.** The referencing method (100) according to the preceding claim, **characterised in that** the step of estimating (140) the geometric offset (di, dj) between the simulated radar image and the reference radar image comprises maximising the conditional probability $P(di,dj/SAR)$ of the offset (di, dj) knowing the reference radar image (12) considered.

**3.** The referencing method (100) according to any of the preceding claims, **characterised in that** the step of calculating (130) the simulated radar image (22) comprises determining an average reflectance factor (R) of the reference SAR image (12) calculated on the area of interest (18) considered for calculating said simulated SAR image (22).

**4.** The referencing method (100) according to any of the preceding claims, **characterised in that** each selected area of interest (18) represents a restricted zone of the common zone (15).

**5.** The referencing method (100) according to any of the preceding claims, **characterised in that** the step of selecting (120) at least one area of interest (18) is a selection of at least one zone of interest (18) per fifty kilometre interval, along a North-South axis.

**6.** The referencing method (100) according to any of the preceding claims, **characterised in that** during the step (110) of obtaining at least two reference radar images (12, 14), radar images acquired by any synthetic aperture radar satellite in opposite viewing directions are selected.

**7.** The referencing method (100) according to any of claims 1 to 6, **characterised in that** the digital elevation model (10) is derived from an interferometric pair of synthetic aperture radar images and **in that** one of the images of this interferometric pair is chosen during the step (110) of obtaining at least two reference radar images (12, 14).

8. The referencing method (100) according to the preceding claim, **characterised in that**:

   the steps (130) and (140) relate only to the other reference radar images (14) of the at least two reference radar images (12, 14) obtained;
   and **in that** the step (170) of correcting the at least one radar link point of the reference radar image (12) corresponding to one of the images of the interferometric pair includes a zero geometric offset (di, dj).

9. A system (300) for georeferencing a digital elevation model (10) for implementing the method (100) of any of the preceding claims, **characterised in that** it includes an information processing unit (302) and a random-access memory (304) associated with the information processing unit (302), said random access memory (304) including instructions for implementing the method (100), said information processing unit (302) being configured to execute the instructions implementing the method (100).

10. A computer program product comprising instructions which, when the program is executed by a computer, cause the computer to implement the steps of the method (100) for georeferencing a digital elevation model (10) according to any of claims 1 to 8.

11. An information storage medium (306) storing a computer program comprising instructions for implementing, by a processor (302), the method (100) according to any of claims 1 to 8, when said program is read and executed by said processor (302).

[Fig. 1]

[Fig. 2]

**[Fig. 3]**

**[Fig. 4]**

$26\,(X_{26},\,Y_{26},\,Z_{26})$

18

15

10

P1$_{rad}$

+/- di, +/- dj

26'

12

P2$_{rad}$

+/- di', +/- dj'

26''

14

**[Fig. 5]**

26'

12

26''

14

$26'''(X_{26'''},Y_{26'''},Z_{26'''})$

$26(X_{26},Y_{26},Z_{26})$

10'

**[Fig. 6]**

[Fig. 7]

[Fig. 8]

[Fig. 9]

[Fig. 10]

[Fig. 11]

[Fig. 12]

100

110

120

130

140

170 ← 160 ← 150

180

190

[Fig. 13]

300

302 — 304

306

[Fig. 14]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HONGXING et al.** Correction of positional errors and geometric distortions in topographie maps and DEMs using a rigorous SAR simulation technique. *Photogrammetric Engineering & Remote Sensing*, September 2004